# EUROPEAN PATENT SPECIFICATION

(11) **EP 3 381 339 B1**
(45) Date of publication and mention of the grant of the patent: **01.01.2020**
(21) Application number: 18164617.5
(22) Date of filing: 28.03.2018
(51) Int. Cl.: A47J 42/38

(54) **COFFEE GRINDER-DOSER WITH IMPROVED LID**
KAFFEEMÜHLENDOSIERER MIT VERBESSERTEM DECKEL
MOULIN À CAFÉ-DOSEUR DE CAFÉ À COUVERCLE AMÉLIORÉ

(30) Priority: 31.03.2017 IT 201700035834
(43) Date of publication of application: 03.10.2018
(73) Proprietor: Mazzer Luigi S.p.A., 30037 Scorzè, Venezia (IT)
(72) Inventor: MAZZER, Giovanni, I-30037 Scorzè, VENEZIA (IT)
(74) Representative: Mitola, Marco

(56) References cited:
- WO-A1-2017/031112
- US-A- 5 186 399
- US-A1- 2004 177 763

## Description

### SCOPE

The present invention relates to a coffee grinder-doser with improved lid.

### STATE OF THE ART

As is known, it is necessary to perform cleaning and maintenance operations on grinder-dosers at planned intervals.

To carry out such operations, a lid or a generic covering element must be detached or removed from its seat, which, for structural reasons, is in normal use integrally connected to the body of the grinder-doser by means of at least one non-separable but flexible joining element.

For example, there is the case of a housing/casing with an electrical/electronic system mounted therein that must be connected continuously with the rest of the grinder-doser machine system; the lid must be partially removed from its normal position to access the parts that it covers.

The lid is removed, for example, to carry out maintenance, cleaning and replacement of internal parts such as the grinders of the grinder-doser.

As seen, the lid could support some electrical connections or cables that connect a display, usually positioned at the center of the lid, with the electronic devices contained in the body of the grinder-doser.

Therefore, in this case, the lid must be handled with care so as not to damage the electrical connections.

No prior art solutions provide a second support point for the lid; in any case, in handling there is a real risk of bumping or damaging the parts making up the grinder-doser.

Moreover, solutions are known wherein to allow the lid to be adequately removed, the latter is electrically connected to the internal parts of the machine by means of a non-removable cable, which must be long enough to allow said handling.

However, such solution causes a space problem due to the fact that the cable will occupy a relatively high volume in the normal use position; moreover, the cable is subjected to a high mechanical stress in the handling operations to which it would be subjected. Repeated actions may therefore lead to damage to the cable itself.

Therefore, the known solutions involve problems of size and reliability over time of the electrical connections.

Moreover, the known solutions are inconvenient for the operator, since they may require the same to use one hand to support the lid removed from the relative body in order to prevent the lid from dangling from the power supply cable, and at the same time, use the other hand to carry out further maintenance/disassembly operations. Cited known solutions are disclosed by US2004/177763.

### PRESENTATION OF THE INVENTION

The need is therefore perceived to resolve the drawbacks and limitations cited with reference to the known art.

Such need is satisfied by a grinder-doser according to claim 1.

### DESCRIPTION OF THE FIGURES

Further features and advantages of the present invention will become more understandable from the following description of its preferred and non-limiting embodiments, wherein:
figure 1 shows a perspective view of a coffee grinder-doser according to an embodiment of the present invention, in a closed configuration of the lid for accessing the containment compartment;
figure 2 shows a perspective view of a coffee grinder-doser of figure 1, in an open configuration of the lid for accessing the containment compartment (in this non-limiting embodiment, the containment compartment is the grinding chamber containing the grinders of the grinder-doser);
figure 3 shows an exploded view of some components of the grinder-doser of figure 2;
figure 4 shows a perspective view, from a different angle, of the grinder-doser of figure 2, in the open configuration of the lid for accessing the containment compartment;
figure 5 shows the enlarged detail V of figure 4;

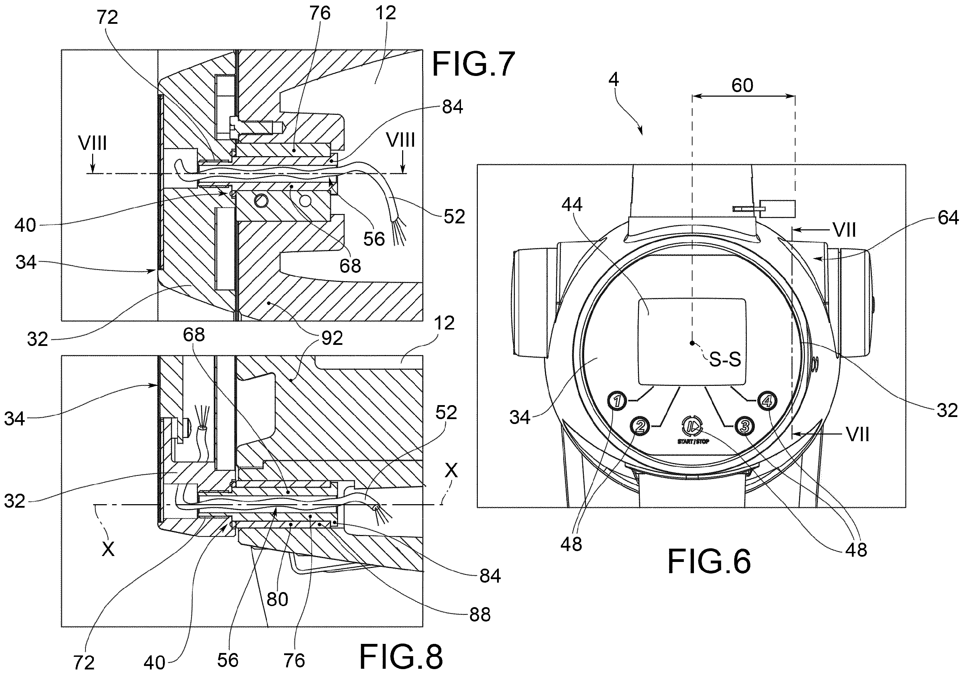

figure 6 shows a front view of a portion of the grinder-doser of figure 1;
figure 7 shows a sectional view of the grinder-doser of figure 6, along the sectional plane VII-VII of figure 6;
figure 8 shows a sectional view of the grinder-doser of figure 6, along the sectional plane VIII-VIII indicated in figure 7;
figures 9A-9B are perspective views of a grinder-doser in the closed and open configuration, respectively, of the lid according to an embodiment of the present invention without a position/orientation sensor operatively connected to a display on the lid;
figures 10A-10B are perspective views of a grinder-doser in closed and open configuration, respectively, of the lid according to an embodiment of the present invention provided with a position/orientation sensor operatively connected to a display on the lid.

The elements or parts of elements in common between the embodiments described hereinafter will be indicated at the same numerical references.

### DETAILED DESCRIPTION

With reference to the aforementioned figures, a total schematic view of a grinder-doser according to the present invention is collectively indicated at 4.

The coffee grinder-doser 4 comprises a grinder-doser body 8 which delimits at least one containment compartment 12, which, in one possible non-limiting embodiment, is a grinding chamber which encloses at least one coffee grinder 20 operatively connected to an electric motor 16, contained in the grinder-doser body 8.

For the purposes of the present invention, the axis of orientation of the motor is irrelevant: therefore, it may be either horizontal or vertical.

The grinder-doser body 8 further comprises a base 24 and a hopper 28 for containing coffee beans. The hopper 28, in a known manner, conveys the coffee beans towards the at least one grinder 20 so as to obtain coffee powder.

The grinder-doser body 8 comprises a lid 32 which closes an access opening 36 to said containment compartment 12.

The access opening 36 is a hole typically with a circular cross-section arranged on a front side of the grinder-doser body 8.

For the purposes of the present invention, the shape and position of the access opening 36 are not binding.

It is to be noted that the lid 32 in the construction illustrated in the figures covers the access to the grinding zone of the grinder-doser 4; in other possible variant embodiments, the lid 32 may perform the function of covering a ground coffee delivery duct or other compartments containing parts of the grinder-doser 4.

The lid 32 is at least partially detachable with respect to said grinder-doser body 8.

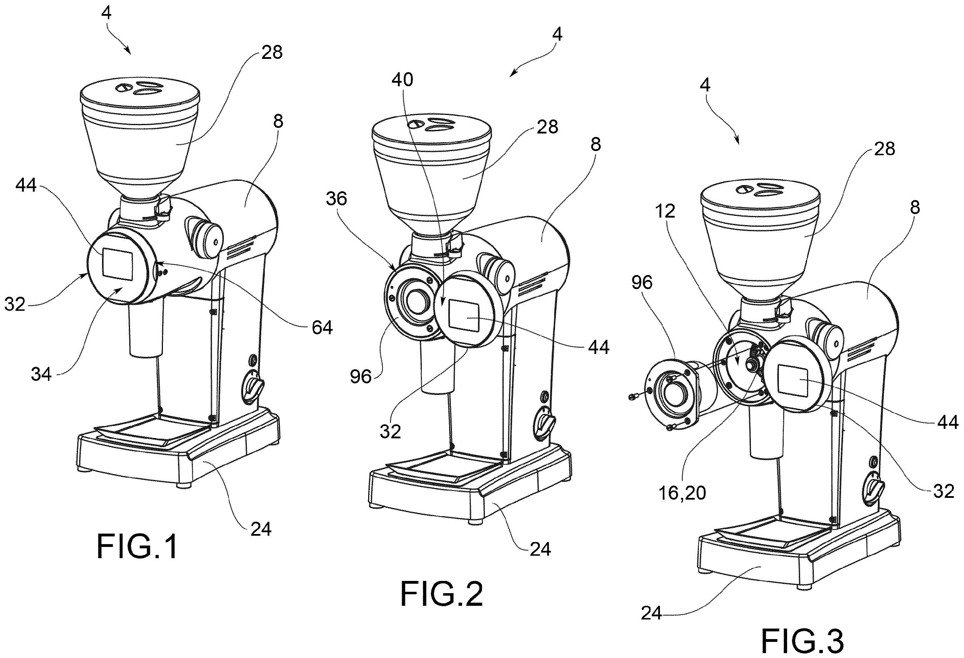

Advantageously, the lid 32 is associated with the grinder-doser body 8 by means of a hinge 40, defining a hinge axis X-X, so as to be mechanically supported by the hinge 32 in the passage from a closed configuration (figure 1), wherein the lid 32 prevents access to said access opening 36, to an open configuration (figure 2), wherein said access to the access opening 36 is allowed.

The lid 32, on a front face 34 opposite to the access opening 36, comprises an electric element electrically connected to at least one electric component housed in the grinder-doser body 8, by means of a connecting cable 52.

For example, said electrical element may comprise a display 44 and/or at least one command 48 (such as, for example, a push button, a BLE communication module, a sensor of a physical measurement such as temperature, etc.).

The electric component, housed in the grinder-doser body 8, may be any, such as for example the electric motor 16 but also any other electric device of the grinder-doser 4.

The connection cable 52 may be any electric cable or connector with a circular or dumbbell cross-section, suitable to make an electric connection between at least one electric component contained in the grinder-doser body 8 and the display 4 or command 48 on the front face 34 of the lid 32.

The connection cable 52 passes through a seat 56 formed inside said hinge 40. In other words, the hinge 40 is at least partly hollow so as to delimit the seat 56 which partially houses the connection cable 52.

The connection cable 52 is housed with clearance inside the seat 56.

According to one embodiment, the seat 56 is arranged coaxially with said hinge axis X-X so as to house the connection cable 52 parallel thereto.

Preferably, the hinge axis X-X is perpendicular to said access opening 36, so that the lid 32, in the transition from the open configuration to the closed configuration, rotates parallel to a plane tangent to said access opening 36.

Preferably, the hinge axis X-X is parallel and offset by an eccentricity 60 with respect to an axis of symmetry S-S of the lid 32.

The lid 32 preferably has a disk shape and is axialsymmetric with respect to an axis of symmetry S-S parallel to said hinge axis X-X.

Preferably, the lid 32 is hinged to the body of the grinder-doser 8 at one of the lateral ends 64 thereof.

In this way, as a result of the rotation for the transition from the closed configuration to the open configuration, the lid 32, once opened, allows full access to the access opening 36 of the containment compartment 12.

According to one embodiment, the hinge 40 comprises a cylindrical bushing 68 having a first end 72 attached to the lid 32 and a second end 76 housed inside a bearing 80 attached to the grinder-doser body 8.

The first end is for example screwed to the lid 32.

The second end 76 is, for example, rotatably attached to a bearing 80 which in turn is attached to the grinder-doser body 8. For example, the bearing 80 may be attached with screws or even inserted with interference.

According to one embodiment, the bearing 80 is a plain bearing produced by means of a bushing made of anti-friction material. In turn, the second end 76 comprises a collar 84 which forms an undercut on a side edge 88 of the bearing 80, so as to oppose the extraction of the cylindrical bushing 68, and therefore of the lid 32, in removal from the containment compartment 12.

Preferably, the hinge 40 comprises limit stops to the opening and closing rotation of the lid 32.

Preferably, said limit stops (not shown) are configured so as to allow the lid 32 to rotate 180 degrees; for example, the limit stops are aligned with each other along a horizontal axis Y-Y.

According to one possible embodiment, the lid 32 comprises a position/orientation sensor (not shown) operatively connected to the display 44 of the lid 32, so as to adapt the orientation of the images shown on the display 44 to the position/orientation of the lid 32.

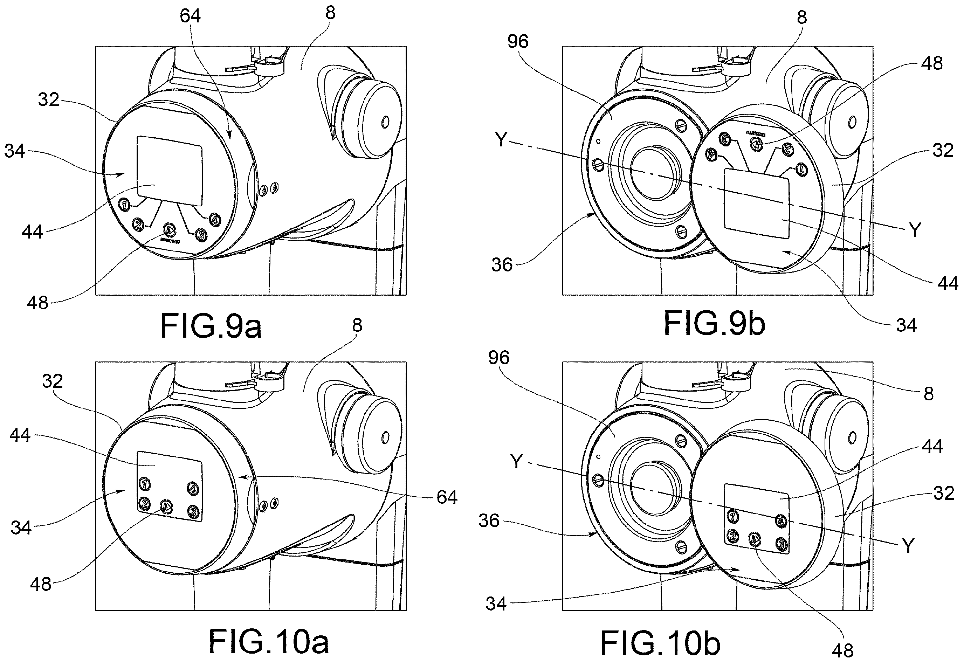

This feature is illustrated in figures 9-10.

In particular, figures 9A-9B show the lid 32 in the closed and open position, in the case wherein such function of adapting the orientation of the images shown by the display 44 to the position/orientation of the lid 32 is not provided.

In the corresponding figures 10A-10B, however, an embodiment is seen wherein the adaptation of the orientation of the images shown by the display 44 to the position/orientation of the lid 32 is provided.

For example, said position/orientation sensor comprises a gyroscope.

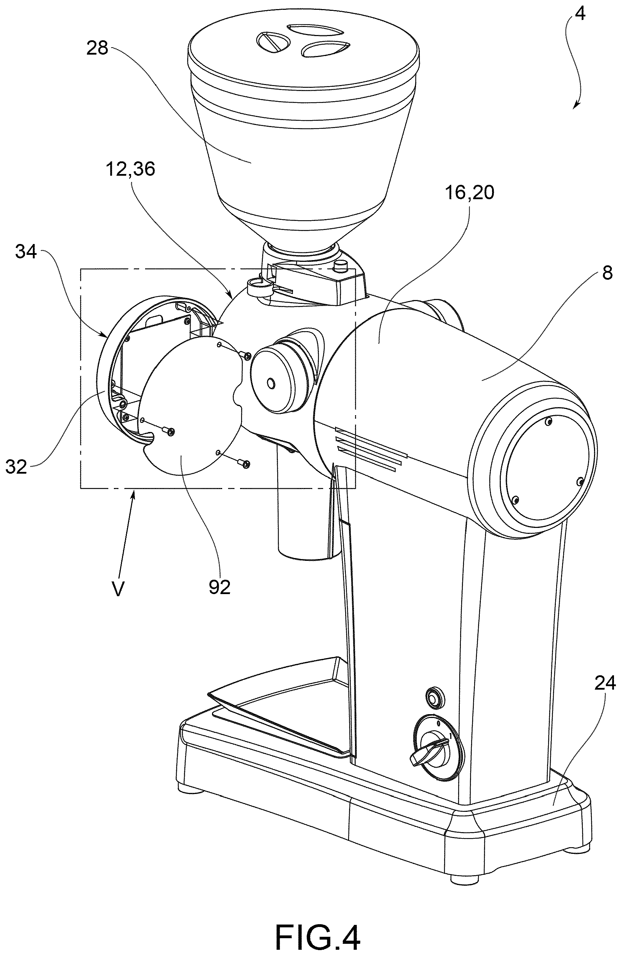

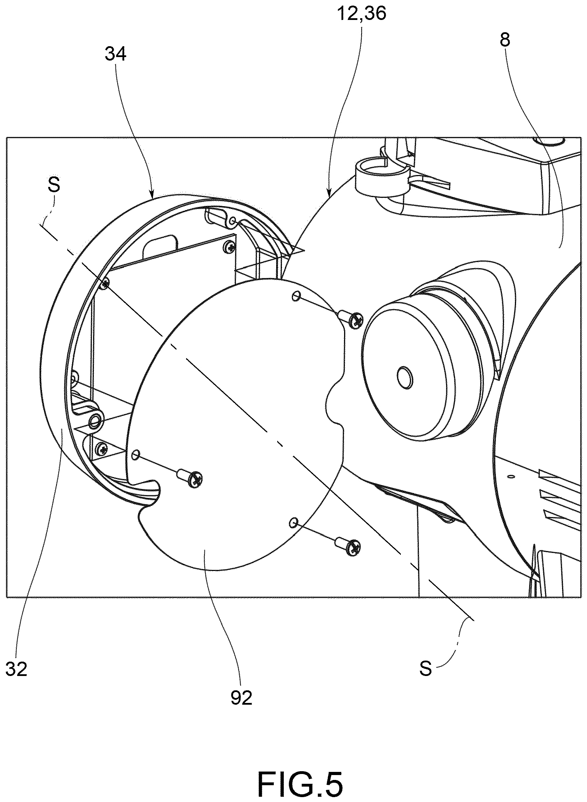

According to one possible embodiment, the lid 32 comprises a rear end 92, arranged facing the grinder-doser body 8, on the opposite side of the front face 34 bearing the front display 44, removable when the lid 32 is in the open position (figure 4-5).

In this way, when the lid 32 is in the open position, it is possible not only to carry out maintenance and/or cleaning on the components inside the containment compartment 12, but also to disassemble the rear end 92 and carry out maintenance inside the same lid.

It should be noted that the figures shown illustrate a grinder-doser having an electric motor 16 with horizontal motor axis, and the rotation of the lid 32 takes place in the vertical plane about a horizontal hinge axis X-X.

However, such configuration must not be considered restrictively for the purposes of the present invention.

For example, it is also possible to provide a grinder-doser having an electric motor 16 with a vertical axis (and rotation plane of the horizontal lid about a vertical hinge axis X-X) or it is also possible to provide that the lid 32 rotates about a hinge axis X-X not bound by the direction of the motor axis.

In other words, the hinge axis X-X may have any inclination relative to the rotation axis of the electric motor 16.

The operation of a grinder-doser according to the present invention will now be described.

In particular, one starts from the closed position of the lid 32, wherein access to the containment compartment 12 is blocked. In such position, the lid 32 is preferably locked in position.

Once the lid 32 has been unlocked, the same is rotated, for example 180 degrees clockwise, with one hand until it reaches the open position. The lid 32 may be left in such open position without needing to be held in position; in effect the limit stop in opening supports it in such limit position (figure 2).

Furthermore, the limit stop also serves to prevent the lid 32 from turning indefinitely, twisting the connecting cable 52.

In this way there is complete access to the containment compartment 12, after the possible removal of a closure casing 96.

Thus, the maintenance, replacement and/or cleaning operations are carried out inside the containment compartment 12.

Moreover, it is also possible in such position to disassemble and service the lid 32 itself, after removing the rear end 92 (figures 4-5).

It should be noted as in the open configuration of the lid 32, the electric connection between the display 44 and/or the command 48 on the lid 32 and the electric components inside the grinder-doser body 8 is always active. This means that the operator may check some functions of the grinder-doser 4 (in particular of the display 44 and of the commands 48) without having to close the lid first. Moreover, the connection cable 52 is always protected inside the hinge 40, the grinder body 8 and the lid itself and is not subjected to excessive flexing or twisting, since these are constrained by the travel limit of the hinge movement.

As may be appreciated from the foregoing, the grinder-doser according to the present invention overcomes the disadvantages of the prior art.

In particular, due to the proposed solution, a hinge is provided, arranged between the lid and the grinder-doser body, which allows the partial removal, but at the same time also the support of the removed lid/casing.

Therefore, the coffee grinder-doser according to the present invention allows maintenance operations (such as cleaning, changing grinders, electrical work, etc.) to be carried out in a simple, fast and safe manner.

In effect, after removing the corresponding attachment screws, the operator may rotate the lid with one hand. The lid remains in position without having to be supported and/or accompanied in the open position. In this way the access to the inner compartment of the grinder-doser body is immediate and the operator may access it with either hand to work with greater precision and speed.

In the operation of opening and/or closing the lid, the power supply cable is not subjected to mechanical stress since it does not in any way support the lid and is therefore not subjected to the actions bending and/or excessive twisting.

In effect, the power cable is housed with clearance inside the hinge.

The coffee grinder-doser with the hinge thus shaped allows one to hide therein the power supply cable of the display or electrical components housed in the lid, thus avoiding external encumbrances due to cables, as well as avoiding, as seen, the mechanical stresses to the cable itself in the operations wherein, according to the solutions of the prior art, it was necessary to remove the lid.

Moreover, the rotation of the lid allows access to the rear portion of the lid for maintenance access to the board or other electrical components housed inside the lid itself, without removing it from the machine or having to support it.

A person skilled in the art, in the object of satisfying contingent and specific requirements, may make numerous modifications and variations to the grinder-dosers described above, all of which are contained within the scope of the invention as defined by the following claims.

## Claims

1. Coffee grinder-doser (4) comprising
- a grinder-doser body (8), an electric motor (16), at least a grinder (20) operatively connected to said electric motor (16),
- a containment compartment (12) provided with a respective access opening (36),
- a lid (32) closing said access opening (36) to the containment compartment (12),
- the lid (32) being at least partially detachable with respect to said grinder-doser body (8),
wherein
- the lid (32) is joined to the grinder-doser body (8) by means of a hinge (40), defining a hinge axis (X-X), so as to be supported mechanically by the hinge (40) in the transition from a closed configuration, wherein the lid (32) prevents access to said access opening (36) to an open configuration wherein it allows said access, **characterised in that** the lid (32) comprises an electric element electrically connected to at least one electric component housed in the grinder-doser body (8) by means of a connection cable (52), said connection cable (52) passing through a seat (56) made inside said hinge (40).

2. Coffee grinder-doser (4) according to claim 1, wherein said electric element comprises a display (44) and/or at least one command (48).

3. Coffee grinder-doser (4) according to claim 1 or 2, wherein the seat (56) is arranged coaxially to said hinge axis (X-X) in order to house the connection cable (52) parallel thereto.

4. Coffee grinder-doser (4) according to any of the claims from 1 to 3, wherein the connection cable (52) is housed with clearance inside the seat (56).

5. Coffee grinder-doser (4) according to any of the claims from 1 to 4, wherein the hinge axis (X-X) is perpendicular to said access opening (36), so that the lid (32) in the transition from the open configuration to the closed configuration rotates parallel to a plane tangent to said access opening (36).

6. Coffee grinder-doser (4) according to any of the preceding claims, wherein the hinge axis (X-X) is parallel and offset by an eccentricity (60) with respect to an axis of symmetry (S-S) of the lid (32).

7. Coffee grinder-doser (4) according to any of the preceding claims, wherein the lid (32) is hinged to the grinder-doser body (8) at a lateral end (64) thereof.

8. Coffee grinder-doser (4) according to any of the preceding claims, wherein the lid (32) has a disc-shape and is axialsymmetric with respect to an axis of symmetry (S-S) parallel to said hinge axis (X-X).

9. Coffee grinder-doser (4) according to any of the preceding claims, wherein the hinge (40) comprises a cylindrical bushing (68) having a first end (72) attached to the lid (32) and a second end (76) housed inside a bearing (80) attached to the grinder-doser body (8).

10. Coffee grinder-doser (4) according to any of the claims from 1 to 9, wherein the hinge (40) comprises limit stops to the opening and closing rotation of the lid (32).

11. Coffee grinder-doser (4) according to claim 10, wherein said stops are configured to allow the lid (32) to rotate 180 degrees.

12. Coffee grinder-doser (4) according to claim 10 or 11, wherein the limit stops are aligned with each other along a horizontal axis (Y-Y).

13. Coffee grinder-doser (4) according to any of the preceding claims, wherein the lid (32) comprises a position/orientation sensor operatively connected to a display (44) of the lid (32), in order to adapt the orientation of the images shown on the display (44) to the position/orientation of the lid.

14. Coffee grinder-doser (4) according to claim 13, wherein said orientation/position sensor comprises a gyroscope.

15. Coffee grinder-doser (4) according to any of the preceding claims, wherein the lid (32) comprises a rear end (92), placed facing the grinder-doser body (8), on the side opposite a frontal display (44), removable when the lid (32) is in the open position.

## Patentansprüche

1. Kaffee-Mahl-Dosiervorrichtung (4), umfassend:
- einen Mahl-Dosiervorrichtungskörper (8), einen Elektromotor (16), wenigstens ein Mahlwerk (20), welches betriebsmäßig mit dem Elektromotor verbunden ist,
- ein Aufnahmefach (12), welches mit einer entsprechenden Zugangsöffnung (36) versehen ist,
- einen Deckel (32), welcher die Zugangsöffnung (36) zu dem Aufnahmefach (12) verschließt,
- wobei der Deckel (32) wenigstens teilweise bezüglich des Mahl-Dosiervorrichtungskörpers (8) lösbar ist,
wobei
- der Deckel (32) mit dem Mahl-Dosiervorrichtungskörper (8) mittels eines Scharniers (40) gekoppelt ist, welches eine Scharnierachse (X-X) definiert, um so von dem Scharnier (40) in dem Übergang von einer geschlossenen Konfiguration, in welcher der Deckel (32) einen Zugang zu der Zugangsöffnung (36) verhindert, zu einer offenen Konfiguration mechanisch getragen zu sein, in welcher er den Zugang erlaubt,
**dadurch gekennzeichnet, dass** der Deckel (32) ein elektrisches Element umfasst, welches mit wenigstens einer elektrischen Komponente, welche in dem Mahl-Dosiervorrichtungskörper (8) aufgenommen ist, mittels eines Verbindungskabels (52) elektrisch verbunden ist, wobei das Verbindungskabel (52) durch einen Sitz (56) hindurchtritt, welcher innerhalb des Scharniers (40) gebildet ist.

2. Kaffee-Mahl-Dosiervorrichtung (4) nach Anspruch 1, wobei das elektrische Element eine Anzeige (44) und/oder wenigstens ein Anweisungselement (48) umfasst.

3. Kaffee-Mahl-Dosiervorrichtung (4) nach Anspruch 1 oder 2, wobei der Sitz (56) koaxial zu der Scharnierachse (X-X) angeordnet ist, um das Verbindungskabel (52) parallel dazu aufzunehmen.

4. Kaffee-Mahl-Dosiervorrichtung (4) nach einem der Ansprüche von 1 bis 3, wobei das Verbindungskabel (52) mit einem Abstand innerhalb des Sitzes (56) aufgenommen ist.

5. Kaffee-Mahl-Dosiervorrichtung (4) nach einem der Ansprüche von 1 bis 4, wobei die Scharnierachse (X-X) senkrecht zu der Zugangsöffnung (36) ist, so dass der Deckel (32) in dem Übergang von der offenen Konfiguration zu der geschlossenen Konfiguration parallel zu einer Ebene rotiert, welche tangential zu der Zugangsöffnung (36) ist.

6. Kaffee-Mahl-Dosiervorrichtung (4) nach einem der vorhergehenden Ansprüche, wobei die Scharnierachse (X-X) parallel bezüglich einer Symmetrieachse (S-S) des Deckels (32) und um eine Exzentrizität (60) von ihr versetzt ist.

7. Kaffee-Mahl-Dosiervorrichtung (4) nach einem der vorhergehenden Ansprüche, wobei der Deckel (32) an den Mahl-Dosiervorrichtungskörper (8) an einem lateralen Ende (64) davon angelenkt ist.

8. Kaffee-Mahl-Dosiervorrichtung (4) nach einem der vorhergehenden Ansprüche, wobei der Deckel (32) eine Scheibenform aufweist und achsensymmetrisch bezüglich einer Symmetrieachse (S-S) parallel zu der Scharnierachse (X-X) ist.

9. Kaffee-Mahl-Dosiervorrichtung (4) nach einem der vorhergehenden Ansprüche, wobei das Scharnier (40) eine zylindrische Buchse (68) mit einem ersten Ende (72) an dem Deckel (32) angebracht und einem zweiten Ende (76) innerhalb eines Lagers (80) aufgenommen umfasst, welches an dem Mahl-Dosiervorrichtungskörper (8) angebracht ist.

10. Kaffee-Mahl-Dosiervorrichtung (4) nach einem der Ansprüche von 1 bis 9, wobei das Scharnier (40) Begrenzungsanschläge für die Öffnungs- und Schließrotation des Deckels (32) umfasst.

11. Kaffee-Mahl-Dosiervorrichtung (4) nach Anspruch 10, wobei die Anschläge dazu eingerichtet sind, es dem Deckel (32) zu erlauben, um 180 Grad zu rotieren.

12. Kaffee-Mahl-Dosiervorrichtung (4) nach Anspruch 10 oder 11, wobei die Begrenzungsanschläge miteinander entlang einer horizontalen Achse (Y-Y) ausgerichtet sind.

13. Kaffee-Mahl-Dosiervorrichtung (4) nach einem der vorhergehenden Ansprüche, wobei der Deckel (32) einen Positions-/Orientierungssensor umfasst, welcher mit einer Anzeige (44) des Deckels (32) betriebsmäßig verbunden ist, um die Orientierung der an der Anzeige (44) gezeigten Bilder an die Position/Orientierung des Deckels anzupassen.

14. Kaffee-Mahl-Dosiervorrichtung (4) nach Anspruch 13, wobei der Orientierungs-/Positionssensor ein Gyroskop umfasst.

15. Kaffee-Mahl-Dosiervorrichtung (4) nach einem der vorhergehenden Ansprüche, wobei der Deckel (32) ein hinteres Ende (92) umfasst, welches zu dem Mahl-Dosiervorrichtungskörper (8) weisend an der Seite gegenüber einer vorderen Anzeige (44) platziert ist, lösbar, wenn der Deckel (32) in der offenen Position ist.

## Revendications

1. Moulin à café-doseur de café (4) comprenant
- un corps de moulin-doseur (8), un moteur électrique (16), au moins un moulin (20) relié opérationnellement audit moteur électrique (16),
- un compartiment de confinement (12) pourvu d'une ouverture d'accès (36) respective,
- un couvercle (32) fermant ladite ouverture d'accès (36) au compartiment de confinement (12),
- le couvercle (32) étant au moins partiellement détachable par rapport audit corps de moulin-doseur (8),
dans lequel
- le couvercle (32) est assemblé au corps de moulin-doseur (8) au moyen d'une articulation (40), définissant un axe d'articulation (X-X), de sorte à être supporté mécaniquement par l'articulation (40) dans la transition d'une configuration fermée, dans laquelle le couvercle (32) empêche l'accès à ladite ouverture d'accès (36) vers une configuration ouverte, dans laquelle il permet ledit accès, **caractérisé en ce que** le couvercle (32) comprend un élément électrique connecté électriquement à au moins un composant électrique logé dans le corps de moulin-doseur (8) au moyen d'un câble de connexion (52), ledit câble de connexion (52) passant à travers un siège (56) réalisé à l'intérieur de ladite articulation (40).

2. Moulin à café-doseur de café (4) selon la revendication 1, dans lequel ledit élément électrique comprend un afficheur (44) et/ou au moins une commande (48).

3. Moulin à café-doseur de café (4) selon la revendication 1 ou 2, dans lequel le siège (56) est agencé coaxialement audit axe d'articulation (X-X) afin de loger le câble de connexion (52) parallèlement à celui-ci.

4. Moulin à café-doseur de café (4) selon l'une quelconque des revendications 1 à 3, dans lequel le câble de connexion (52) est logé avec un jeu à l'intérieur du siège (56).

5. Moulin à café-doseur de café (4) selon l'une quelconque des revendications 1 à 4, dans lequel l'axe d'articulation (X-X) est perpendiculaire à ladite ouverture d'accès (36), de sorte que le couvercle (32) dans la transition de la configuration ouverte à la configuration fermée tourne parallèlement à un plan tangent à ladite ouverture d'accès (36).

6. Moulin à café-doseur de café (4) selon l'une quelconque des revendications précédentes, dans lequel l'axe d'articulation (X-X) est parallèle et décalé d'une excentricité (60) par rapport à un axe de symétrie (S-S) du couvercle (32).

7. Moulin à café-doseur de café (4) selon l'une quelconque des revendications précédentes, dans lequel le couvercle (32) est articulé sur le corps de moulin-doseur (8) au niveau d'une extrémité latérale (64) de celui-ci.

8. Moulin à café-doseur de café (4) selon l'une quelconque des revendications précédentes, dans lequel le couvercle (32) a une forme de disque et est axisymétrique par rapport à un axe de symétrie (S-S) parallèle audit axe d'articulation (X-X).

9. Moulin à café-doseur de café (4) selon l'une quelconque des revendications précédentes, dans lequel l'articulation (40) comprend une bague cylindrique (68) ayant une première extrémité (72) attachée au couvercle (32) et une seconde extrémité (76) logée à l'intérieur d'un palier (80) attaché au corps de moulin-doseur (8).

10. Moulin à café-doseur de café (4) selon l'une quelconque des revendications 1 à 9, dans lequel l'articulation (40) comprend des butées de fin de course de rotation d'ouverture et de fermeture du couvercle (32).

11. Moulin à café-doseur de café (4) selon la revendication 10, dans lequel lesdites butées sont configurées pour permettre au couvercle (32) de tourner de 180 degrés.

12. Moulin à café-doseur de café (4) selon la revendication 10 ou 11, dans lequel les butées de fin de course sont alignées l'une avec l'autre le long d'un axe horizontal (Y-Y).

13. Moulin à café-doseur de café (4) selon l'une quelconque des revendications précédentes, dans lequel le couvercle (32) comprend un capteur de position/d'orientation connecté opérationnellement à un afficheur (44) du couvercle (32), afin d'adapter l'orientation des images présentées sur l'afficheur (44) à la position/l'orientation du couvercle.

14. Moulin à café-doseur de café (4) selon la revendication 13, dans lequel ledit capteur d'orientation/de position comprend un gyroscope.

15. Moulin à café-doseur de café (4) selon l'une quelconque des revendications précédentes, dans lequel le couvercle (32) comprend une extrémité arrière (92), placée en face du corps de moulin-doseur (8), sur le côté opposé à un afficheur frontal (44), amovible lorsque le couvercle (32) est dans la position ouverte.
